# EUROPEAN PATENT SPECIFICATION

(11) **EP 2 088 852 B1**
(45) Date of publication and mention of the grant of the patent: **13.10.2010**
(21) Application number: 07815738.5
(22) Date of filing: 30.08.2007
(51) Int. Cl.: A01K 11/00

(54) **TRACEABILITY PROCESS AND SECURITY ELEMENTS USED IN SAID PROCESS**
VERFOLGBARKEITSPROZESS UND IN DEM PROZESS VERWENDETE SICHERHEITSELEMENTE
PROCÉDÉ DE TRAÇABILITÉ ET ENSEMBLE D'ÉLÉMENTS DE SÉCURITÉ UTILISÉS DANS LEDIT PROCÉDÉ

(30) Priority: 30.10.2006 AR P060104750
(43) Date of publication of application: 19.08.2009
(73) Proprietor: Lima, Alberto Julio Minorini, Ciudad De Buenos Aires (AR)
(72) Inventor: Lima, Alberto Julio Minorini, Ciudad De Buenos Aires (AR)
(74) Representative: Chaillot, Geneviève
(86) International application number: PCT/BR2007/000297
(87) International publication number: WO 2008/052298

(56) References cited:
- WO-A-01/19178
- WO-A-95/02957
- DE-A1-102005 012 678
- US-A1- 2003 172 560
- US-A1- 2005 272 057

## Description

### Technical Field

This invention relates to a traceability process applied to cattle in general and specially to bovine cattle, although also extensible to fish and aquatic animals; traceability meaning a set of measures, actions and processes that allow to register and identify each product from its source to its final destination. Specifically consisting in the capacity to rebuild history, journey or application of a determined product, identifying the source of its components, history of the processes applied to the product and distribution and localization after being delivered.

By having this information it is possible to deliver defined products to specific markets, with the warranty of certainly knowing the source and its history. The traceability concept is, without a doubt, associated to modern productive processes and improved quality and value products for the final client.

### State of the Art

According to the definition stated by the European Parliament, traceability is the possibility of finding and following the tracks, through all production, transformation and distribution stages of a food product (for human or animal use) or a substance to be included in a food product or with the probability of doing so.

Therefore, traceability or "traceability", is a system that allows to follow a products, its components, raw matter route and associated information, from the source to the final destination or vice versa, through the complete supply chain.

Traceability is the tool that allows to satisfy the need that the consumer has of knowing how food products have been obtained and processed, because it allows to know the environment impact of each of the products, also being able to know the animal's genetic from which the product is obtained, the food it consumed and if substances that could harm the consumer have been used (e.g., hormones, antibiotics, antiparasitics, prohibited preservers or not, and any other prohibited substance such as pesticides).

In the case of bovine cattle or any other cattle, applying traceability firstly benefits the consumers, as it aims to assure innocuousness of food products, which increases the consumer's confidence, as they can prove that the product purchased is quality produced. Benefiting further those who implement this tool, as it obliges to order the productive processes inside the firm, which leads to improving the products quality, increasing productivity and therefore, diminishing costs, i.e., aiming to increase the business income capacity. It also improves the trademark image and value and allowing to differentiate from competitors, facilitating further to input a faster response should the customers complain, providing exact information as to in which stage of the productive chain the problem was caused and undoubtedly identifying the commercial culprit.

Nowadays, available technology allows to precisely track the route of a product in the productive and commercialisation chain. Integration of Internet, communication networks, wireless access, specialised software, mobile devices, GPS, among others, makes it possible to be able to detect the exact point and moment where the event took place. On this basis, particularly in highly developed countries, specific norms have been published about traceability; however, none warrants the results obtained by applying the process of this invention.

Nowadays, the different market demands, the different bovine breeds, the varied production systems and zones, impose labelling of cuts and quarters so that the consumer knows what he is purchasing. For example: which breed is he going to choose? what degree of fat is convenient?, what was his breeding like, at what age and when was it slaughtered?, what has it eaten during growth and fattening?, which sex was it?, is the meat matured in a cooling system or frozen?, etc.

Evidently, there is a tendency worldwide to a differentiated consumption, where the consumer can distinguish what is tenderness, marbling, can relate age to tenderness, know the British, continental European breeds, zebu, multiple crossings, etc.

Notwithstanding, after the Mad Cow Disease (Bovine Spongiform Encephalopathy) appeared, the meat market changed. For example, the International Epyzooties Organization declared Argentina to be free of Bovine Spongiform Encephalopathy, for which reason applying the traceability process with proofs would warrant that Argentine meat will not be replaced by others from endemic regions with that illness.

Although the bountifulness of meat is recognised for determined countries worldwide, for example Argentina, for tenderness, marbling, flavour, conditions, genetics, climate or feeding systems, nowadays the consumer is worried about consumed products quality, especially Europeans that have intensely suffered the mad cow problem. This causes them to be very heedful as to the meat cuts source offered in the supermarket gondolas, retailer shops, restaurants, etc.

Many countries have taken measures to warrant permanence in markets, by regulations addressed to be able to identify animal source along the commercial chain. The most demanding have done it individually and others in a group per troop, from the farm where they have been bred and fattened to the consumer, passing through transport and cold-storage plants. However, these processes applied up to now have a unidirectional responsibility, i.e., it is always the salesman who must prove and warrant the meat quality sold or exported. With the proposed process, bi-directional stages are clearly applied; wherein such is explained in detail further along, it will be possible to undoubtedly demonstrate if the salesman has sold meat in apt conditions or if contamination has appeared *a posteriori* caused by the purchaser or distributor. These new stages of the proposed process introduce an improvement as regards known traceability processes: by being a bi-directional responsibility, the purchaser and/or distributor must also show that contamination was not produced after purchasing the packaged meat product, which is achieved by using a sealed strip and locket indicator for proposed meat cuts.

Additionally, by increasing security parameters to the maximum, the claimed process serves to inform the consumer that does not know which parameters define meat quality so that he could choose and the reason for the cost variation, so that there is no better contribution than that of a truthful meat labelling for an intelligent consumer. If the value of the product will be associated to the information provided, then it is indispensable to apply a traceability process to form a Data Centre where each consumer can accede to know what he is being sold.

Official entities should strictly control labelled data and the truthfulness of information contained in the database, therefore, warranting a bigger offer variation and increase in the purchasing market (national and foreign); hence, obtaining a bigger and varied production.

### Brief Description of the Invention

The preferred embodiment addressed to cattle of the claimed traceability process comprises a first stage of document traceability and sanitary certification chain comprising the stages of:
1) Acquiring computerised identification packs (sold by the official entity to the producer and computerises)
2) Identification of animals by:
   a) Attaching animal identification
   b) Inscription in animal identification registers
   c) Registration in data centre (local official entity) The second stage of document traceability and sanitary certification chain comprises the stages of:
3) Transport of animals to another establishment:
   a) Extracting hairs with bulbs from offspring not yet weaned and filed in the animal identification register book or offspring register
   b) Providing official documents for transport
   c) Computerization of transport (registration in Data Centre)
4) Animals reception:
   a) Registration in Data Centre
   b) Inscription in animal identification book
5) Transport to fairs or cold-storage plant: (Idem point 3)
6) Reception of animals at fairs or cold-storage plants:
   a) Registration at the Data Centre
7) Slaughtering:
   a) Reading of animal identification on line
   b) Data Centre authorises or rejects
   c) Half carcases are then attached sealed strip
8) Genetic Bank: DNA is extracted (hair with bulbs) and are filed adhered to the disabled animal identification
9) Cutting up of half carcases
   a) Temporary identification of cuts
   b) Cutting up
   c) Jerking (Cut toilette)
   d) Placing of locket sampler (definite identification and encryption of genetic and biochemical sample) and registration at Data Centre

   The third stage of the traceability process proposed comprises the following steps:
10) Transport of cuts
   a) Informing destination to data centre (official entity)
   b) Providing a computerized sanitary document (export or consumption) with triple signatures protected by a security seal (Firm - Mover - Official entity)
11) Slicing or mincing of cuts:
   a) Manual or printed identification of the code that originated it Additionally, the process claimed includes the following stages exclusively referred to the documents:
      1) Traceability of documents:
         a) Transfer of official document with triple signatures protected by each security seal (Producer - Official entity - Mover)
         b) Transfer of official document from auction fairs with quadruple signatures protected by each security seal (Consignee - Purchaser - Official entity - Mover)
         c) Sanitary certification with a triple security seal (Manufacturer - Official entity - Mover)
         d) If exported, validation of the exporting sanitary certificate at pre-boarding or border
         e) Making of the definite exporting certificate (exporting firm) with a signature protected by a security seal and official validation with a signature protected by a security seal of the Official entity traffic inspector.

Furthermore, this process is completed with a series of control stages of the animals still alive, or meat products and derivatives on highways, streets and sales outlet, wherein an authorized inspector verifies the documents and inputs by a wireless post to the data centre, which allows this input by using a personal and secret key. Using the post reads an official identification (sealed strip barcode or animal identification of live animal) and the data centre verifies if the movement is authorized.

In this manner illegal traffic is detected, cattle and merchandise stealing is prevented, as well as tax evasion.

Lastly, the process also established DNA control in laboratories, by the stages of:
a) routinely controls traceability compliance,
b) checking traceability rupture and determines responsibility.

### Brief description of the figures

Figure 1 comprises a front view of an animal identification document, an exploded view, a plane view of a pin and a base cut thereof.
Figure 2 comprises a front view and an exploded one of an animal identification document of a second embodiment, without the chip being included.
Figure 3 shows an exploded view and a plane view of a secondary animal identification.
Figure 4 represents a front view of a birth certificate.
Figure 5 shows a front view with a detailed cut of a bracelet sealed strip.
Figure 6 comprises a cross-section of the locket sampler and a view of the accompanying sealed strip.
Figure 7 is a front view of the locket sampler and Figure 8 is a plane view of the upper lid thereof.
Figure 9 represents a sequence of placing the locket sampler in a meat cutting.

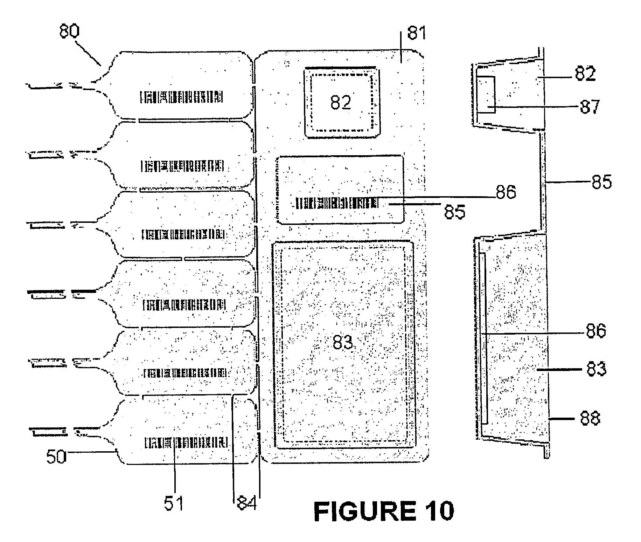

Figure 10 shows an upper view and cross-section of a bracelets plate-seal strip set.
Figure 11 is a flow diagram showing the necessary steps for the stages of slaughtering a beast, when the animal enters the slaughter house till the cuts are put into the cold storage chamber.
Figure 12 is a flow diagram detailing the steps of the stages of cutting up and distribution, after the stage of Figure 11.
Figure 13 represents a graphic scheme wherein the proposed traceability process is conceptually summarised.
Figure 14 shows a graphic scheme wherein the three types of elements have been represented that interact in the process: those emitting information, those that capture or read emitted information and those that process the captured information by software.
Figure 15 shows a side view and a plane view of a temporary marker in two versions, having a circular base and a square base.
Figure 16 is a plane view of a meat product ready for sale, with the locket sampler attached and its information tag.
Figure 17 and 18 show two view sections of a biochemical sampler with its corresponding pin in a position to be inserted.

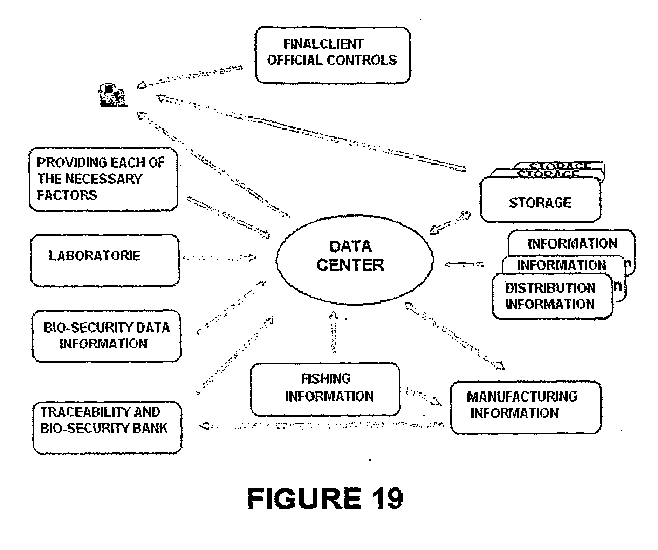

Figure 19 is a flow diagram representing the traceability computerised process and bio-security according to a second alternative embodiment.
Figure 20 shows a perspective and view sections sequence of a sampler and encryptor for canned products, used in a third alternative embodiment.
Figure 21 is a perspective of a proof for canning tins.
Figure 22 shows a perspective of a proof for canning tins sealed with paraffin.
Figure 23 shows a front section of the encryptor assembled with the sampler.
Figure 24 is an outer perspective of the assembled encryptor.
Figure 25 discloses a perspective of a dispenser for canned samples.
Figure 26 shows a detailed view section of the assembled encryptor.

### Detailed description of the invention

The proposed traceability process, in the preferred embodiment, begins with the primary identification stage of cattle, a job that is carried out by means of electronic and optical input of data or only optical.

Identification is carried out by animal identification documents and birth certificates. The animal identification document consists in a special label or tag (1), that further to a barcode (13) and sequential alpha-numbering (2) can comprise an embodied iso-compatible chip. The barcode (13) and the chip (10) contain the same information, the difference is that the barcode is used "in situ" by the person involved at a determined moment of the traceability process, while the use of the chip is at a distance, using RFID technology (Radio Frequency Identification Devices) by which a micro-transponder (chip) embedded in an identification element (button, animal identification, implant or ruminal bolus capsule, etc.) is univocally associated to an object (vehicle in the case of tolls or parking lots; part of, in a manufacturing/traceability process if manufactured products, spare part in the case of automatic deposit, etc.) or an individual (person, in the case of access control; animal in the case of traceability, etc.)

With the resource of a reader/scanner (fixed or portable transceiver) in ranges close to (0.1 to 1 metre) the encrypted data can be excited, detected and read/ recovered in the micro-transponder. The reader stores the data (by hundreds or thousands, according to capacity) and/or retransmits the processing system in various possible ways.

The chip (10) is a passive element which when excited by radio frequency emission by the reader device, responds nearly instantly, returning the programmed code.

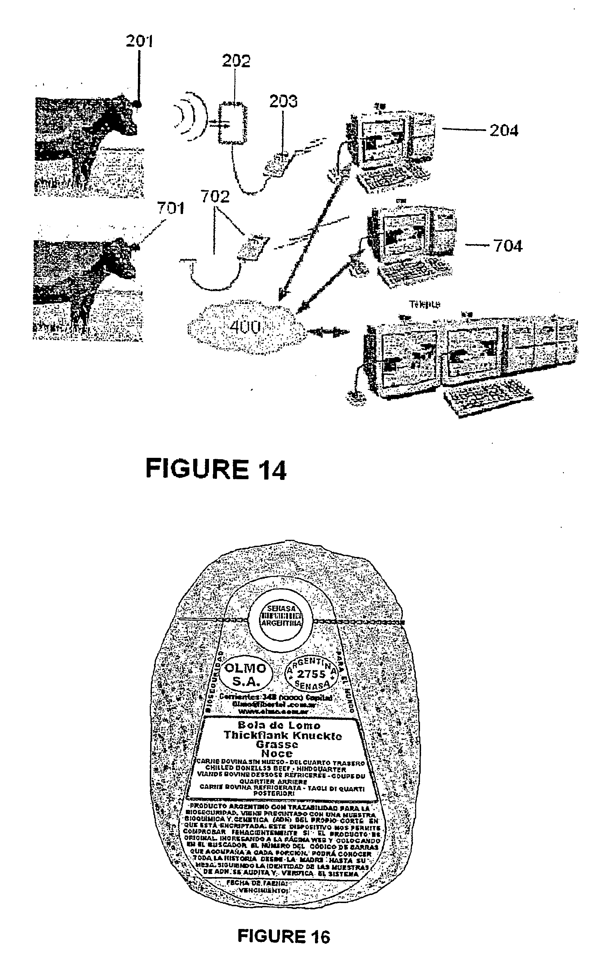

This stage of the process is shown in the graphic scheme of Figure 14, wherein reference (400) corresponds to the data centre.

Data centre (400) is a great database that by a software specially designed, allows to operate on line with all the parts of the country using the network to send data. Software should respond to official requirements, private (of any origin, including abroad). It should comprise files only for use by authorized officials having a personal and secret code. Input of information should only be done by somebody who is authorised by the system and using personal codes.

It also authorises control of transport in any part of the country using a post that in real time may require information on the transfer of merchandise by only reading the label and/or document. Who searches for that information in the data centre, has to be an authorized person, previously identified by his key before receiving it.

When illegal traffic is discovered, the acting agent and deed are immediately identified. The data centre will undoubtedly notify the corresponding authorities who should act promptly and effectively.

The data centre has a security mechanism that prevents accidental or intentional damage as it is duplicated and in another installation, in addition to more sophisticated mechanisms for protecting hardware and the system.

The animal identification document (1) is unique, inviolable and unforgeable and can be manufactured with a long lasting material, as it must surpass the lifetime of a bovine reproducer, for which reason it can be of flexible synthetic material.

The preferred embodiment of animal identification has a security sticker (11) stuck to it with the isologotype of the corresponding state entity (SENASA in Argentina's case), further having a correlative numbering (7digits= three letters and four numbers). This sticker (11) is known as "tamper evident" and therefore, cannot be extracted without being disabled. Additionally, it is resistant to weather and to normal wearing away due to use, even in extreme regions, maintaining its properties and colours unchanged, which are optically variable according to how the light angles as regards the observers eye, so it cannot be photographed. This is achieved using UV drying inks, which also does not allow the printing to be erased in any way.

Furthermore, the base of the animal identification is opaque (not transparent). This security sticker (11) comprises a double film preferably of OPP/Polyester, with a thickness in the range of approximately 50 microns.

The preferred animal identification (1) embodiment comprises a substantially flat region wherein the sticker (11) is adhered and an alphanumeric code (2) and barcode (13) are shown. This flat face of the animal identification comprises on one of its sides a projection with rounded edges, from which a stepped chamber (3) emerges.

This chamber (3) comprises a hollow space (4) wherein a pin (6) with a rigid point (8) will be lodged. Said pin (6) comprises a body (5) joined to a circular base (7) wherein a microchip (10) with filaments is embedded and an antenna (9) disposed on all the circumference of the base (7). This particular configuration of the animal identification (1), added to the flexibility of the synthetic material with which it has been manufactured, helps to prevent it being pulled off when hooked during the animals life time, which will be attached to one of its ears. The barcode (13) allows for optical reading and the embedded chip (10) allows for passive electronic reading.

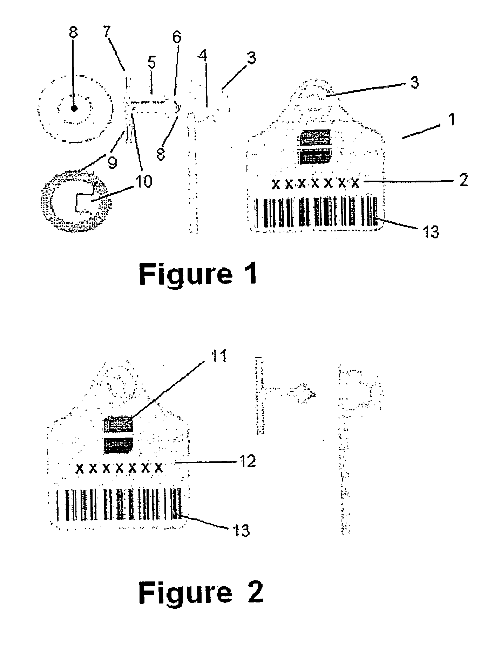

An alternative embodiment of the animal identification without the chip included is shown in Figure 2. The animal identification configuration is exactly the same, having the security sticker (11), alpha-numbering (12) and barcode (13), as well as the pin structure.

Another indispensable element for the first identification stage of cattle is the birth certificate (18). This document accompanies each animal identification and comprises a special security label (26) of the "tamper evident " type, that if should one want to extract it, the registration paper to which it is adhered is destroyed, providing evidence of the attempt.

The birth certificate (18) comprises a central transparent section (19) and two opaque right (20) and left (21) side sections. Said left section (21) includes the same isologotype as that used in the animal identification (1), as well as an identical alphanumeric encryption (22) and barcode (27).

As an additional security measure, taking into account that the average life time of an animal could be 10 years and during that time the animal identification (1) should remain unchanged, a secondary animal identification (25) button type can be attached to the animal, should the main one be damaged or lost.

This secondary animal identification (25) accompanies the documentary animal identification (1), but on the right ear. It is used to identify an animal that has lost the documentary animal identification (1) or vice versa. In both circumstances, the controller entity will provide a substitute documentary animal identification, with a new security seal, alpha-numbering and barcode, together with another secondary animal identification and will later relate this issue in the database, replacing the original documentary animal identification lost.

Said secondary animal identification (25) is smaller that the main one and only has a stepped chamber (16) comprising a hollow space (24) where the pin (15) with a rigid point (17) will be lodged. Said pin (15) comprises a body (23) joined to the circular base (14) wherein the same alphanumeric code has been engraved as that of the main animal identification (1). Neither has a microchip nor a barcode.

Having detailed the elements to be used in this first stage of the process, in the preferred embodiment addressed to cattle, we can now proceed to describe it.

Firstly, the animal identification (1) is attached to the left ear of an offspring not yet weaned and registered in the animal identification register the number corresponding to the mother's animal identification in the location corresponding to the label to be covered by the transparent part. If they exist, the tattooed numbers are also registered. The secondary button type animal identification (1) will be attached to the right ear with an identical alpha-numbering as that of the primary animal identification (1), so that an animal should have a primary or documentary animal identification (1) and birth certificate (18) with identical alpha-numbering and barcode. The secondary animal identification (25) will only have the same alpha-numbering. Additionally, the tattoo on the ear or lip can coexist with the secondary animal identification (25) but not replace it.

The tattoo refers to the animal's genealogical origin and can be included in the system.

Next a register of animal identification should be created, consisting in a book to be used by the farmer and created to complete registration of all the animals of that species under control of traceability. Some minimum security characteristics that this register should comply with would be: pages with correlative numbering on front and back of the page, outline of the birth certificate, appropriate spaces to include the dates of registration and loss due to death, stealing, loss, selling, loss of animal identification and substitutions, etc. The lid is removed to place the control state entity functionary's signature protected by the corresponding security seal, who will register entry of the register and will place therein all the identification data of the owner of the cattle. It should also have an oval outline to contain genetic samples (hairs with follicles) to be supported by a special oval security sticker.

There are occasions in which due to various circumstances offsprings not yet weaned cannot be identified (for example farms with dense underbush), in this case a documentary animal identification will be used for animals with non registered maternity that would differentiate them from those that do have. These animal identifications are exactly the same as the documentary animal identifications and to those of the secondary animal identification respectively, except that they will be manufactured with a colour previously chosen to identify animals born in special areas or under certain circumstances, in which the offspring not yet weaned were not able to be identified, as the maternity post weaning is not provable in a practical manner. This special colour is for the offspring to be recognised as such and will be placed on animals with the owners markings who have requested them.

Offsprings born in sanitary risk areas will also be differentiated with similar animal identification to that of documentary animal identification and secondary ones, except for a distinctive colour that emphasises this circumstance.

It would also be desirable to differentiate animal identification with regional criteria, assigning a specific colour to each particular sanitary region.

All these variants as to data and colour of the animal's identification means are not relevant as regards the inventive concept involving the novel stages of the proposed process, but are included so as to illustrate an improved manner to put this invention into practice. What is important to emphasise as regards these animal identification means is that they do not require any subsequent printing on the elements used by the entity that implements this system. It is a tight-proof system, which makes it different to the known identification methods, that do not offer sure means of proof, but in fact allows the possibility of modifying the product without any certainty of said amendments being registered.

As a further advantage that makes it different from known methods, neither special tweezers are required to attach the animal identification to the animal, which will save the farmer from extra expenses, nor is specially trained personnel required to attach them.

Currently, with the advance in laser photocopy techniques, a great insecurity situation is now apparent as regards official documents and certificates. It is practically impossible or very difficult to verify if official document used in current known processes are unauthentic or original and this makes the transfer of cattle unreliable and at high risk throughout the country, as well as the traffic products and sub-products of animal origin. While the technological advances in photocopying have provided significant improved results, these same advances have created real and potential conditions for a high level of fraud.

For this reason, the proposed traceability process includes the detailed inviolable and unforgeable documentary chain already detailed, protecting all the traffic of cattle so as to allow to undoubtedly recognize each of those responsible in the documentary chain, from the beginning to its final destination, with neither the need of specially trained personnel, nor of special apparatus for verification.

The process continues when the farmer, upon removing the animal identification in the official entity, should sign an Affidavit where the animal identification(s) requested must be used for the animal species that they have been request for, that will only place them on those that are his property and have the respective mark that so credits it and will input the data in the animal identification register. Furthermore, it states that he knows and will comply with all the norms in force that regulate traceability that also set forth what must be complied with by the producers, movers, official entity and police controls during the transfer of cattle elsewhere. The same type of statements must be signed by manufacturers, traders and movers.

The proposed process continues when the bovine enters a cold-storage plant already identified by the means previously explained. At that moment the documentary data is input in the official computerised system and its arrival is undoubtedly verified according to the regulations in force. After the regulatory resting lapse (24 h) of the animals in the pens, the official functionaries authorise its slaughter, using the authorized slaughtering list or the official document provided by the control state entity.

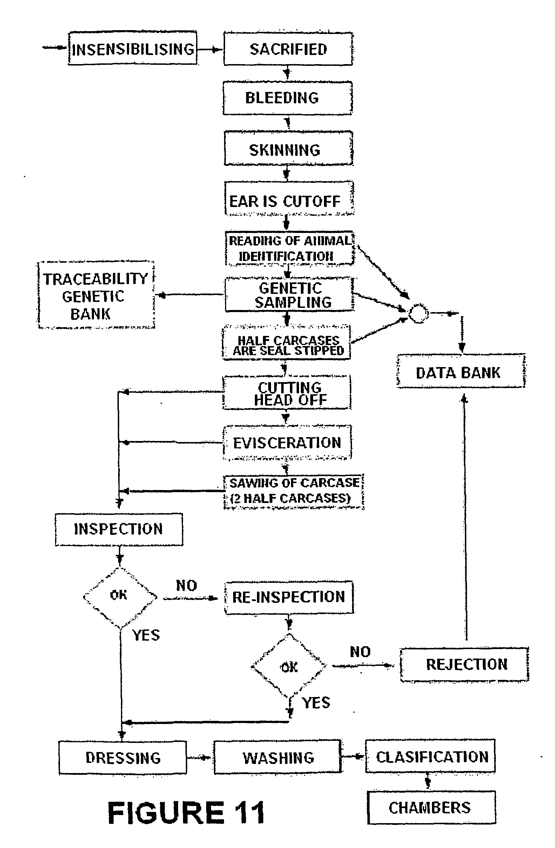

The initial stage of this process can be followed in detail with the flow diagram provided in Figure 11.

Once the animal has been slaughtered and before completely removing the hide, the documentary animal identification (1) is then visually verified for authenticity checking the legitimate and inviolable security sticker (11). From then onwards, two alternative processes can be followed according to the official decision:
a) with a genetic sample extraction (internal consumption)
b) with a genetic and chemical sample extraction (export).

a) With genetic sample extraction
   The official agent proceeds to remove the animal identification (1) sheet without altering the security seal (11), number (2) and code (13). With a tweezers extracts 10 or more hairs from the animal's ear with its pilous follicle intact. Protects them and adheres them to the back part of the sectioned animal identification sheet with its security seal with sequential alpha-numbering assigned to the agent in the database. He uses label applier to do this.
   The animal identifications of that days slaughtering with its corresponding DNA sample is put into a dated box and filed in a Genetic Bank created thereof.
b) With genetic and chemical-sample extraction: the left ear is removed, with the documentary animal identification (1) adhered and introduced in an "ad hoc" machine that reads the barcode (13) or embedded chip (10) for the computer system to determine the complete coincidence with the regulated processes.

Should there be any abnormality, an acoustic sign is set off included in the computerised program that alerts the Official inspection so as to determine the eventual abnormalities and may be solver according to the regulations. Otherwise, if everything is in order, the machine proceeds to:
A) extract a genetic sample for the ear (wedge) and keep it identified.
B) disable the documentary animal identification
C) relate by the system 6 security bracelets sealed strips (50), three for each half carcase, comprising a bar code (51) (unique number), with the code (13) of the destroyed animal identification and add to the database: country, sanitary control, N° of slaughtering establishment and date of slaughter.

In both processes the two half carcases are identified by six identical sealed strips (50), two wrapped round the respective Achilles tendon, two wrapped round the respective shoulder and two on the edges of the barren next to the xiphoid cartilage.

The system only foresees the amount of six sealed strips per animal identification; these sealed strips have a different colour to those used in further cuttings. Their numbers (52) and codes (51) are related in the database. The half carcases are stored in aerating chambers for cooling and to wait for the end of "rigor mortis". According to manufacturing/commercial destination, these can be issued as half carcases, manta, quarters, boneless quarters or cuts. When the quarter carcase is to be quartered, i.e., when smaller cuts are to be obtained from the half carcase, the sealed strip is read with a laser reader or other equivalent media and a series of adhesive labels are printed with the respective barcode and in pre-established quantities, according to the cuts to be obtained. These labels are struck to each identification marker (70), which will be used to temporally identify cuts in the cold storage plant so that they are not mixed up with others. Therefore, the markers (70) are adhered to specific location, corresponding to the cuts to be quartered, such that upon quartering does not interfere with the cutters job and each remains adhered to the cut that is destined to "jerking" (cut cleaning and toilette).

The markers (70) configuration comprises a square (71) or circular (72) flat base wherein the previously mentioned labels are adhered. The other side comprises a double pin (73) with rigid ends.

These temporary identifiers (70) are manufactured with appropriate flexibility in non-contaminating and non-toxic plastic material, and can be recovered to be re-used having been sterilized previously (after two years). However due to low cost, it is possible to employ them as disposables.

The "cutter" removes the identification marker (70) and inserts it as a routine in the only "ad hoc" eyelet in the table and once the "toilette" of the cutting has been finished, adheres the identification marker (70) again on the clean cut, but on the side corresponding to the bone extracted. When the cuts are exported, the identification marker (70) is replaced "a posteriori" by a locket sampler (90) which will be detailed further along. The marker (70) comprises a faceted edge that provides it with sufficient grasp to extract it easily.

The next step of the proposed process comprises depositing a sample of the slaughtered carcase in the official genetic bank. This is necessary to be able to undoubtedly prove in the near future (following the inverse route from the commercial destination) traceability of the product, as a genetic sample will accompany each exported cut and another genetic sample will be deposited in the Official Sanitary Control of the producing country. Both ends should be bothered and concerned on the perfect maintenance of said samples, as they would be the elements of proof when having to demonstrate if a product has exited contaminated from its country of origin or if contamination occurred afterwards.

The extraction of genetic material effected at the cold storage plants, will be done by official personnel, who is the person to certificate the act. In this way the genetic proof for any controversy, will remain at the official entity during a judicial time that should be opportunely established by the competent authorities.

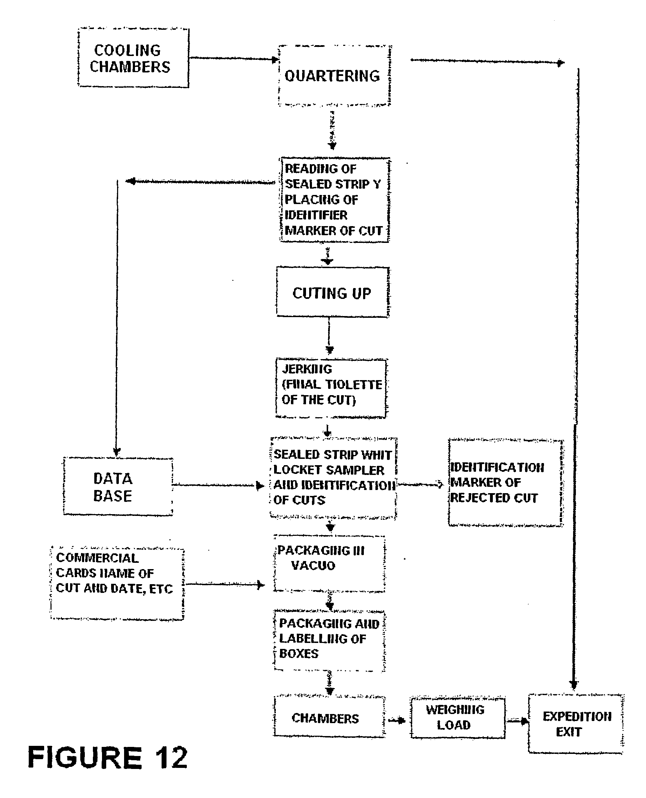

This step of the process claimed, that can be seen in detail in the flow diagram of Figure 12, is done by a machine that extracts biochemical and genetic samples and using a bracelet plate-straps set (80) comprising a blister type central plate (81) with two depressions or cavities (82) and (83) and six sealed strips-bracelet (50) stamped with weakened lines (84) prepared for separating said sealed strip-bracelets (50) from the central body (81) of the blister. The upper face of the blister, between the two depressions, comprises a flat surface (85) wherein the barcode (86) has been pre-printed.

The machine extracting biochemical genetic samples comprises a mouth through which part of the ear is introduced containing the documentary animal identification. This reads the barcode (13) or the chip (10) embedded in the animal identification (1) and as it is connected on line with the data centre and in real time, receives a response if it is correct that that animal identification (animal) is in the plant to be slaughtered. The machine previously washes the animal identification (1) to be able to read without any inconveniences, removing dirt or mud that could be attached.

If even then it cannot be read, a keyboard is provided to manually introduce the number, as is usually done in a shop if e.g., a credit card cannot be read correctly. If the animal identification is rejected, an acoustic signal is released to alert the official inspection personnel. The carcase is then deviated to another via so that slaughtering can continue. If the data centre accepts the animal identification the machine cuts the animal identification separating it from the ear such that the sheet with the legible part (printed) of the security seal (11) remains, all this process occurring inside the machine, which cannot be acceded as it has a sealed strip.

Next, the machine deposits the animal identification (86) portion in one of the blister cavities (83) with a pre-printed barcode and relates the number of the animal identification in the data centre. Almost simultaneously the machine extracts with a puncher a cylindrical wedge (87) of the ear including skin with its hairs and cartilage and deposits it in another depression (82) of the same blister (81); then it seals the blister with a transparent plastic film (88) and expels it into a box where it is filed sequentially (as the blisters are pre-printed an correlative)

The machine, as well as cutting and extracting the sample wedge (87), also manipulates the bracelet plate-sealed strip set (80) and proceeds to release per cutting and by another mouth the 6 bracelet sealed strips (50) with an identical pre-printed barcode (51) as that of the blister, for three of them to be placed on each half carcase.

Once slaughtering has finished, the official inspector proceeds to identify the box with the blisters (81) with the slaughter date and keeps it in a freezing chamber for the term the qualified authority determines as the maximum one. Once the stipulated term has lapsed, the blisters (81) are destroyed and their destruction is registered in the Official computerised system. From that moment on, the right to claim is considered invalidated.

As detailed above the traceability process stage, in the preferred embodiment, concerning extraction and storing of the genetic sample remaining in the producing country, the following step is yet to be detailed, consisting in extracting and preserving the genetic sample to be sent abroad together with the exported product.

This purpose is achieved using the novel sealed strip for meat cuts and locket sampler (30) designed thereof.

The particular configuration of the locket sampler (30) allows to identify a cut related to the animal that originated it and at the same time encrypts in a sealed strip capsule (33) a meat sample that complies with double function that of being a genetic proof of the cut (DNA) and also as an analytical sample to act as a counterproof in the case any harmful substance has been detected therein.

The genetic sample allows to confirm if it is identical to the cut to which it is adhered and inviolably protected by the external sealed strip or not and at the same time prove if it is genetically identical to the sample extracted from the respective bovine's ear and filed by the authorities in the genetic sample bank and/or generic banks of the producing country or slaughtering establishment.

The locket sampler (30) has multiple uses and the most important is to allow to confirm if from the cut and in successive processing (smaller cuts, slicing, very thin slicing, filleting, etc.) traceability has been complied with by the processing plant and if there is identity of sub-cuts, supposedly traced, by the encrypted sample in the sealed strip capsule (33), which should be frozen and kept by said firm.

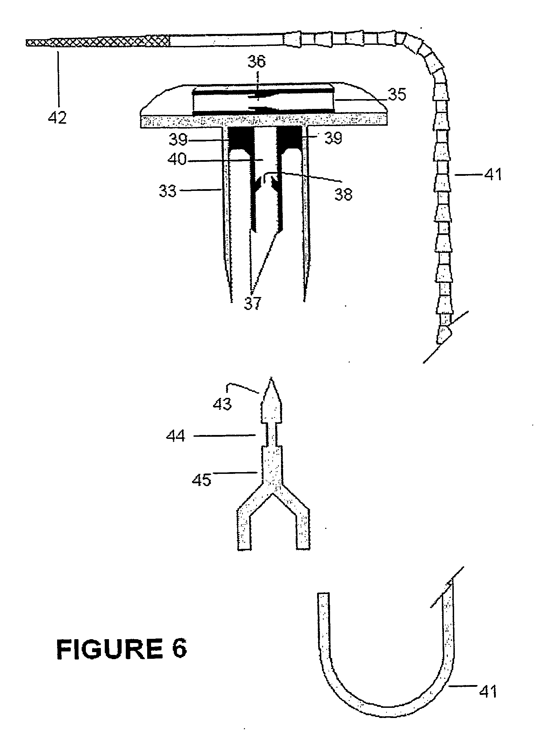

The preferred embodiment of the locket sample (30) is shown in Figures 6 to 8. It comprises a hollow cylindrical body defining said sealed strip capsule (33) and having sharp edges on its open perimeter. This cylindrical body finishing in a circular lid (31) with a flat zone (34) in its concave centre and flap (32).

The lid (31) comprises a hole (35) and locking means 836) to insert a security sealed strip.

Within the cylindrical body capsule (33), a reinforcement base (39) holds a second cylindrical body with walls (37) and sharp edges. This second body within the main body has a locking means (38) defining an inner chamber (40), wherein the end (43) of the pin will be lodged. Once the pin has been introduced into the chamber (40), the locking means (38) will effect the necessary force on the grooves (44) of the pin to prevent being removed thereof. The pins design comprises a base (43) that then continues with the sealed strip itself, which has a pointed (42) end.

The assembly is closed when the pointed end (43) of the security sealed strip (41) is inserted into the hole and locked in the lid (31) of the locket sampler (30).

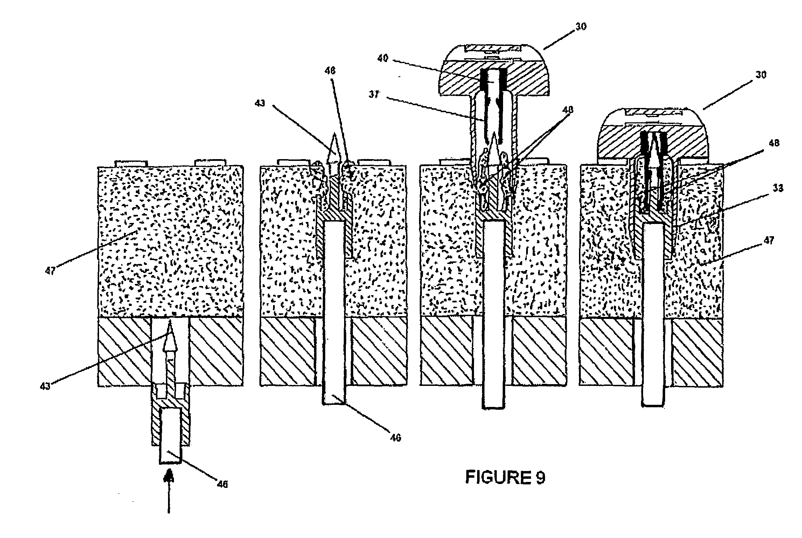

Figure 9 shows the locket sampler (30) placing sequence into a meat cutting (47), wherein the lower end of the pointed end (43) of the pin is shown penetrating the meat driven by a plunger (46). Then the cylinder (33) with sharp edges is stuck to the upper end of the cutting and as it moves along dragging pieces of meat (48) which are trapped within the inner chamber of the locket, when this is closed when the pointed end (43) of the pin enters the chamber (40) and remains held in place by the locking means (38). Next, the sealed strip is closed to prevent the locket sampler from being removed, inserting the end (42) of the sealed strip into the hole (35) of the locket lid.

Furthermore, it is necessary to emphasise that the locket upon perforating the meat can additionally thread a card or tag (tag with an eyelet thereof) of the product with the products description and instructions to understand the function and application of the locket sampler.

The proposed traceability process that, as previously explained, has bi-directional characteristics by introducing the use of the locket sampler in the exported product that should be compared with the sample that remained in the genetic bank of the producing country, has the following advantages and applications as compared to the known unidirectional traceability systems:
a) Allows proving the correct tracing of smaller cuts, slicing, filleting, very thin slicing, etc. identifying them with the cut that originated them.
b) Allows proving the correct tracing of the sealed strip cut with the official genetic sample, extracted from the animal's ear deposited in the Genetic Sample Bank of the official authorities of the producing country that originated them.
c) It is possible to prove the supposed identity of the real sealed strip cut and the meat sample contained in the same sealed strip.
d) If identity has been verified according to item a) in an extreme case, the identity of the genetic sample that the farmer has or a sample of the mother cow's ear can be used to confirm if it is the animal where the cut supposedly comes from.
e) If the whole cut is sold to the final consumer, the presence of this double sealed strip provides the image of a product seriously traced and makes verification possible. Additionally and without a doubt it is an extraordinary marketing tool.
f) Inscriptions on the sealed strip itself identify the country of origin, control, processing establishment and also allows to input the pertinent state entity database and with the unique number itself on the sealed strip accede to all the breading data and all processing undergone by the animal originating the cut: from the birth farm to the manufacturing process and commercialisation of the cut.
g) The particular configuration of the locket sampler allows to simultaneously comply with two functions: as a sealed strip (cutting sealed strip and sample sealed strip) and at the same time two functions: 1) as a genetic sample (DNA) and 2) analytical-chemical sample.
h) Undoubtedly it is a unique means that irrefutably allows to judicially prove correct or false traceability of the product, as well as establish and define legal responsibilities.

Once a prohibited residue in a cut has been proved, a chemical analysis can be done on part of the encrypted sample in the sealed strip locket, together with the genetic identity analysis on the corresponding cut, in this simple manner, proof could be irrefutably established.

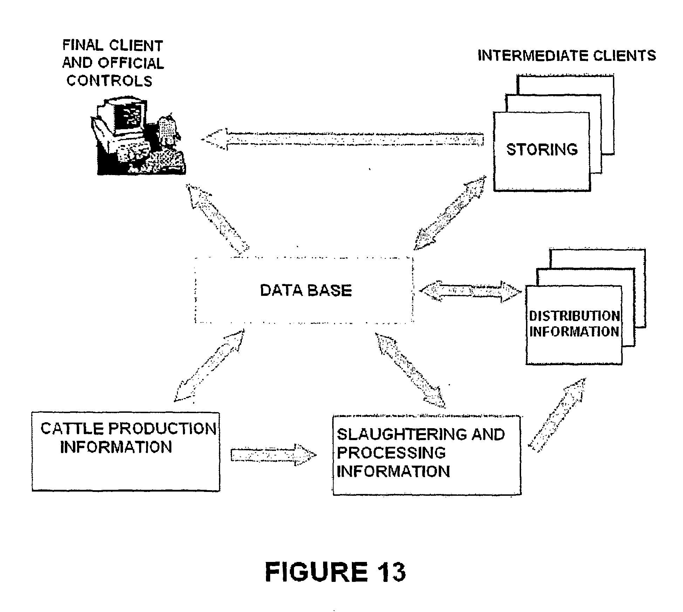

The scheme of Figure 13 briefly summarises the traceability process claimed in the preferred embodiment, addressed to cattle.

Application of this process defines the different responsibilities of the intervening personnel due to internal transport of animals. For example the owner or who is authorised to represent him at the corresponding official entity, should be responsible for transport of cattle, setting forth in a type of affidavit the cattle to be transported by identification of documentary animal identifications, destination thereof, total weight of the animals being transported and his signature protected by the security seal (having a legend verifying it being an affidavit).

The latter further contains, in the opaque area, the identifying data and corresponding alpha-numbering sequence and respective barcode for reading and input to the computerised system. Therefore, the owner or who is authorised to represent him at the corresponding official entity is responsible for cattle transport.

Moreover, upon loading the cattle, the registered mover and authorized vehicle, will visually control or by an optical reader at a distance, the exact correspondence between the documentary animal identifications and those declared on the receipt. If everything is in order, the mover will sign and protect his signature with its own security seal (he would be the second person responsible for loading control).

Finally the transport is presented at the Official Inspectors office who will carry out the final control of all the operation (loading and documents) and once verified and input of data to the computerised system, will place his protected signature on the document for transport of animals with its respective security seal, having a legend that credits it as a sanitary document. Then the sanitary certification chain is initiated.

The Sanitary Certification Chain should be initiated with verification of loading by the veterinary responsible of the rural establishment registered at the corresponding official entity in all circumstances.

To summarise, the control official entity Inspector is who inputs the data of cattle transported in the Organisms computerised system and also sets forth if the cattle has been sold and who is the new owner, who the mover is, which is the transport, destination, date of the operation and every other data required by the control official entity.

The corresponding official entity should create a general register of signatures separately: a) functionaries; b) the rest of the authorised employees. The register should have a double entry: a) in alphabetical order; b) by the sequential order of the respective identification alpha-numbering. The signatures of each agent should have enough features to be characterised and individualised; in the signature official register the graphics of each agent will be registered and also computerised.

Furthermore, every vehicle transporting cattle or merchandise protected by the corresponding official entity should have all doors with security sealed strips, the sealed strip N° will be set forth in the documents and protected by a security seal of the official entity Inspector; the sealed strips cannot be removed except by authorized personnel and should only be replaced by corresponding authorised official entity personnel and setting forth this circumstance and the reason on the reverse of the document, with a signature protected by a security seal and such that under the transparent area of the seal the corresponding number of the new security sealed strip can be seen. The exception being for those delivery vehicles in the same municipal boundary.

When the animal arrives to be slaughtered at an authorised establishment and the documents are in order and according to all that has been opportunely input in the official computerised system, will be slaughtered and can be cur up or not, depending on the species and commercial destination. The dressed carcase, half carcases, quarters and cuts (as applicable) that were identified by the transference system already explained herein, will be transported prior to making the corresponding Sanitary Documents, both for internal consumption and export, which will be signed by the authorised inspection personnel and which signature is protected by the security seal of the respective agent.

When the sanitary authority allows the receipt to be used to transport merchandise for export, it will have the Sanitary Inspector security seal to export and under the transparent area set forth the destination country (always under the supposition the merchandise complies with the commercial and sanitary conditions demanded by the destination country).

The mover verifies that the load described coincides with the documents, as well as the respective weights and will place his signature protected by a security seal in the receipt, prior to being verified by the official entity sanitary inspection. The official entity sanitary inspection will verify the conditions prescribed by law of transport and loading as regards what is described in the receipt, before inputting the data of the operation in the computerised system.

By applying this method, traceability is granted a shared responsibility (the previously mentioned bi-directional concept), because it is not only of interest for the purchaser to undoubtedly establish responsibility chain of a traceable product, but also of great interest to the selling country that the products sold abroad, as traceable by the selling country, really have that origin.

The traceability obtained when applying the present process surpasses the maximum demands of the purchasing countries, from identification of the animal's mother to be slaughtered, uninterruptedly continues with the commercialisation chain of live animals, continues with the slaughtered product, industrial process and up to the cutting (or piece) level.

Up to now we have only analysed the purchaser-salesman relationship (exporter country). But nowadays traceability should reach the consumers table and the state of the art has not yet foreseen an adequate process with this aim, problem which can be solved by applying the novel traceability process claimed, that is also simple and cheap.

The different stages of the proposed traceability process were thought taking special care that they cannot be violated, both in the selling country and importing country and should anything undue happen, this can be proved and undoubtedly establish responsibilities and proofs. Furthermore, the process provides the means for it to be audited with absolute efficacy by the purchaser and also by the salesman (in our case Argentina) to protect the reputation of the products sent that could be replaced by other of unknown source.

When a traceable cut of local meat arrives at a foreign country and while the sealed strip is intact on the corresponding cut, its traceability continues although it has been commercialised many times. When this cut is submitted to a process (e.g., slicing, very thin slicing, smaller cuts, etc) the responsibility of traceable continuity is transferred to the manufacturer that processes it and the exporting country should audit to prove that it is complied with. The process norms that the manufacturer of the purchasing country should comply with established in this traceability process are:
From each cut processed should keep the locket sampler (30) and freeze it. This would be a genetic sample (also a chemical one) that would allow to establish, when considered necessary, if there is a genetic correspondence with the sample kept in the Genetic Sample Bank of the exporting country. If identical, traceability is obviously proved, if not identical, traceability failed somewhere and consequently should be established:
   1. if failure was produced on taking up the tissue sample of the ear (official entity);
   2. or if failure occurred in the sample taken at the cold storage plant (cold storage industry).

Hence, the sample of the traceability official genetic bank (SENASA) will be compared with the genetic sample (hairs) kept in the farmer's animal identification register and/or extract tissue from the animals mother's ear (if it has not disappeared) or otherwise examine the mother's genetic sample (hairs) in the corresponding animal identification register.

By verifying maternity or not of that mother as regards the unknown cut or the genetic identification of the hairs of the farmer's genetic bank with the unknown cut, the following is possible: if positive (maternity or real origin is established) means that the cold storage plant failed (quartering) and if negative, that the official entity made a mistake upon sampling.

Moreover, the exporting country can and should audit traceability, under the responsibility of the foreign country manufacturer that cuts up each cut or piece for sale and should verify the correct handling of traceability according to the following rules:
1. Should check the sealed strip, or identification established of the portions in which each cut (or piece) is divided with an individual or collective sealed strip or other identification (as applicable) that should have the same alfa-numbering and barcode corresponding to the original cut, the sealed strips should basically have the same characteristics as that of the sealed strips that the cuts had provided by the export producing country and/or other identification, according to what is agreed on.
2. Take three samples of identified portion with a document certified by Notary Public, preserve the frozen samples and the Notary Public sealed strips the three samples. One he keeps, the other is kept by the responsible establishment responsible for production and the third sent to the official entity of the producing country to their laboratories for genetic control, compared with the respective genetic sample of the traceability genetic bank or other comparisons with the origin.
With this methodology responsibilities and irrefutable legal proofs can be established undoubtedly.

From the above, the proposed traceability process comprises from the mother to the offspring and then its slaughter, establishing responsibilities and proofs step by step.

With only sending a meat cut pierced by its corresponding security sealed strap, will allow knowing the complete history of this cut even its birth as part of the animal. Should there be any claim as to strange or harmful substances in the respective cut, the product can be re-examined, and once the claim has proved to be true, it will be possible to determine at which stage and who was responsible. In the supposed case that who is responsible denies it, saying that said sealed strip could be erroneously or deceitfully placed in another cut, the cut itself will be verified by comparison with the genetic sample extracted during slaughter by the "Official controller Institution", opportunely filed in the Traceability Genetic Bank with an identical alpha-numbering. If there is genetic identity, traceability would be proved and would depend on the Law to determine and sanction the infringer.

Additionally, in the stage prior to slaughter, the process allows the computerized following of each animal in its transport and process. The regional documentary animal identification (with colours and their respective secondary animal identification) allows to restrict cattle traffic to determined destinations where there are supposed sanitary inconveniences. It also allows taking extreme control measures and proceeding to immediately effect the necessary emergency corrections and a rapid identification of the field.

As previously mentioned, the proposed traceability process is not only applicable to cattle, but also to fishing. In fact, the current demands of the international markets claim traceability of fishing, as urgencies are unavoidable. The farmer that cannot present his traceable products with necessary proof to effectively verify the high quality of the product, with methodologies capable of detecting rupture of traceability, as well as precisely determine those responsible, will be left out of the main markets.

Nowadays bio-security is much compromised due to the real probability of bio-terrorism. Consequently, the traceability process should provide a response to the security needs demanded in more advanced countries or the more exposed ones.

The value of the product will be associated with the information provided and provable veracity. To do this a bi-directional traceability is necessary (that the product can be traced from the water to the table and vice versa) and a data centre where each consumer can accede to know what is being sold, as well as having easy access to statistical information of fishing, regions, time of the year, size, species, possible water contamination, commercial destination, etc. None of the known traceability processes currently applied proposes said bio-directionality.

The proposed traceability process in its second alternative embodiment addressed to fishing does not stop with sale or export of the product, this should continue under the responsibility of the following commercial stages. The manufactures of the producing country can verify that the Argentine traceability has not suffered a breach after sale or replacement of products. That is why this process is bi-directional: both the producer and the purchaser must trace.

In this way, al the commercial stages can be audited, both officially and by the foreign control authorities, as by each of the merchandise owners or consumers.

The stages involved in this alternative embodiment of the process claimed and the elements used thereof are summarised as follows:
- Traceability and bio-security bi-directional chain.
- Fishing (or production)
- Fishing (or production) register
- Document security
- Transport from shore to manufacturing plant.
- Manufacturing
- Locket sampler sealed strip
- Biochemical sampler
- Traceability biochemical bank
- Biochemical samples encryption machine.
- Placing of locket sampler sealed strip
- Security seal
- Temporary identifiers
- Transport of manufactured products (from manufacturing plant to other destinations)
- Definite certification of export
- Applying methods to prevent bio-terrorism.
- Bracelet sealed strip.
- Computerization - Data Centre
- Labelling of packaging with barcodes (with or without a chip)

The first stage of this alternative process is produced upon fishing.

The fishing boats will be controlled on their movement in the sea, they can sail through areas restricted by the fishing control official entity but obviously should not fish. By the Inmarsat system (a satellite global operator of mobile communications) A or B interconnected to log and compass rotation and a software specially designed, encompassing all the security and control organisms demands; course, speed and fishing area data can be obtained. The list of the boats that are violating the authorised fishing areas can be obtained without human intervention and will keep to itself the fishing areas of each boat, except for statistical official studies useful for sustainability of fishing resources (access to highly restricted information).

The alarm set off in the *Data Centre* cannot be violated or ignored *ex profeso* and will alert the control organisms with an indictment initiated automatically, without the probability of loss or concealment. The boats will have one or many video cameras connected to the *Data Centre* that will be activated when the boats use the winch and/or crane for the fishing nets and will be automatically interconnected to Inmarsat. Any accidental or intentional damage will initiate an indicting investigation which will conclude with the dismissal of the person responsible in a proven accident or with the loss of the fishing permit for the infringer and boat. If the accidental damage is reiterated, the owner should duplicate the corresponding apparatus (*back up*)*.*

Fishing of smaller species: these will be overturned into the corresponding boxes, which will have its barcode (the box manufacturer or the manufacturer, upon purchasing the boxes and also the manufacturing establishment should computerise them providing their number data and who they were sold to). Therefore the boxes will also be traceable and should comply with the necessary bio-security requirements. (Corresponding organism approval, In Argentina by SENASA, pre-printed barcode, be able to add sealed strips to warrant inviolability, etc.)

The skipper should computerise in the *Data Centre* inputting with his (exclusive and secret) security code, the boxes codes, actuating inspector, volume fished, date of the corresponding fishing, mover transporting the merchandise, geographic grid squares where fishing took place and the sanitary certificate issued will be sealed with his exclusive security seal, signed and sealed by the control official entity, together with the seal and signature corresponding to the mover. The inspector will computerise all these data including the number of his seal with which he certified his signature.

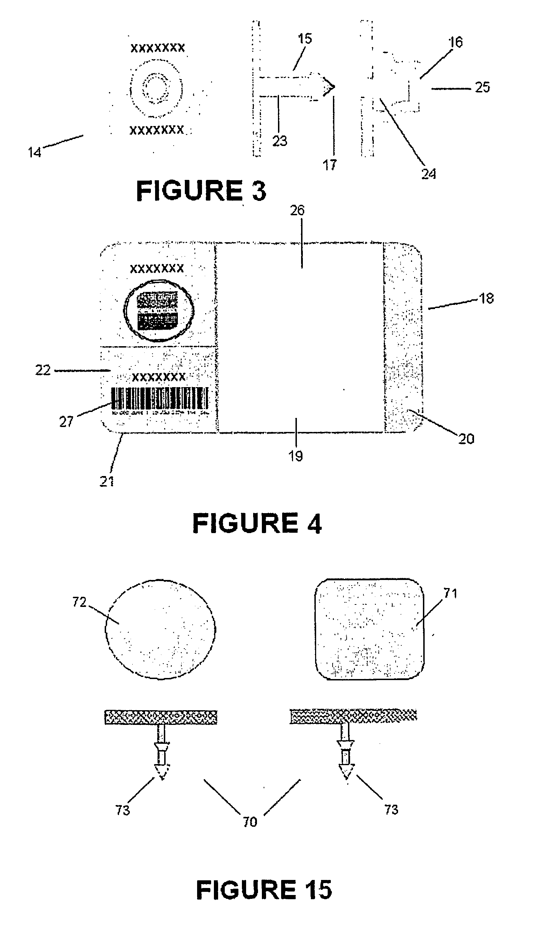

Fishing of intermediate species: idem the previous case except that a temporary marker (70) (Figure 15) should be place on each piece. The marker used in this alternative process is the same as that used in the preferred embodiment, only smaller. Before overturning the fish into the boxes, each temporary marker should be computerised as to which box it is being placed in, relating them with the computerised system. The temporary markers (70) will be purchased by each skipper from the controller official entity, will be computerised and related thereof (will be of exclusive use).

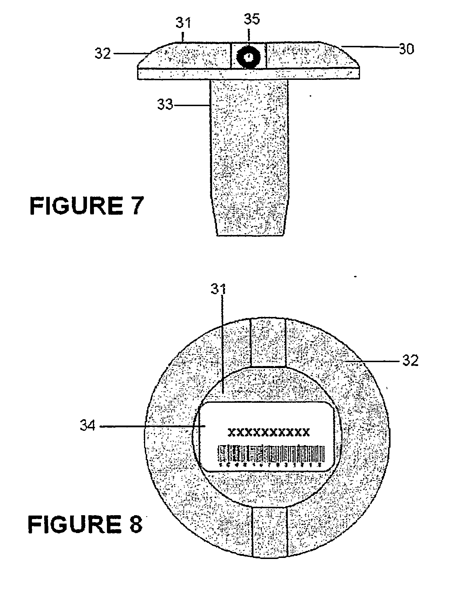

Fishing of big species: Will be identified by a temporary marker (70) or have the necessary equipment on board, can be identified with a locket sampler sealed strip (30) (see Figures 7-9) before freezing.

Fishing (or production) register: is a book to be used by the skipper and created to complete registration of each fishing, volume, date, determination of geographical grid squares, identification of boxes used, number of fish markers used (are sequential and registered in a database in the name of each box manufacturer).

The removal of the lid will be printed so that the authorities sign approval of the register protecting his signature with his exclusive use security seal. The owners or skippers residence and identification data and that of the boat will be taken down. The book number and identification data thereof will be computerise in the *Data Centre.*

This traceability process should evidently be protected by an inviolable and unforgeable document chain. It should allow to undoubtedly recognizing each of those responsible for the document chain, from the beginning to the end, without the need for specially trained personnel, nor special apparatus for verification. The elements to be used in this second alternative embodiment of the proposed process are the same as those used in the preferred embodiment detailed before. Afterwards, all the necessary data will be introduced in the computerised system and a receipt states the product to be transported with complete information, destination thereof, quantity, total weight and his signature protected by a security seal (having a legend that indicates it as being a type of affidavit). The latter on the opaque area will further contain the identification data and corresponding alpha-numbering sequence and respective barcode to be read and input the computerised system.

In this way the owner (or who is authorised to represent him at the corresponding organism) is responsible for the transfer. When loading, the registered mover with an authorised vehicle will visually control or with an optical reader, the exact correspondence between the merchandise to be transported and those stated on the receipt. If everything is in order, the mover will sign and protect his signature with his own security seal (he would be the second one to be responsible to control loading).

Finally the transport is presented at the official inspector's office, who will carry out the final control of the complete operation (loading and documents) and once verified and the data input in the computerised system, will place his protected signature on the document with his respective security sticker (11), which contains a legend which enables it as a sanitary document (initiates sanitary certification chain). He will finally seal strip with a bracelet sealed strip (50) all the doors of the box or container (the numbers will be stated on the receipt or certificate, protected by the intervening official agent security sticker).

Next, the sanitary certification chain should be initiated by the responsible veterinary of the plant in every case verifying the loading. To summarize, the control organism (SENASA in Argentina) Inspector is who inputs the data of the merchandise being transported into the organisms computerised system (computerises the certificate or receipt) and further states if it was sold and who is the new owner, who is the mover, what is being transported, which is the destination, date of the operation, and every other data that the organism requires. The security sticker (11) used in this second alternative embodiment is the same as those used in the preferred embodiment for the animal identification (1). Transport from shore to manufacturing plant: the boxes containing the fishing products, upon being unloaded from the fishing boats on the shore, will be controlled by the organisms control inspectors, who will provide the corresponding sanitary certificates with the signature protected by the security sticker (11) of the inspector and above the signature will place the number of the bracelet sealed strip(s) (50), the skipper will sign and seal on the back part as will the authorised mover. The inspector will verify the hygienic-sanitary conditions of the vehicle and corresponding current authorisation before allowing loading. The inspector will computerise in the data centre having dispatched the merchandise with all the data already seen in the point referred to fishing.

Arrival at the manufacturing plant: The truck will arrive at the manufacturing plant within the timetable established by the shore inspector; there the plant inspector will verify the bracelet sealed strips (50), load and sanitary documents. The merchandise should continue with the cold chain during storage and processing. Each box which content is processed will be previously read by a barcode reader on line with the *data centre.* If the pieces are big or medium the box containing them will be read and related to the *data centre* with the barcodes of the temporary markers (70) of the fish. Obviously these must coincide with those already input in the data centre, if not an alarm will be set off in the data centre and the corresponding sanitary inspections will be notified to avoid responsibility and regulation-wise overcome the doubt.

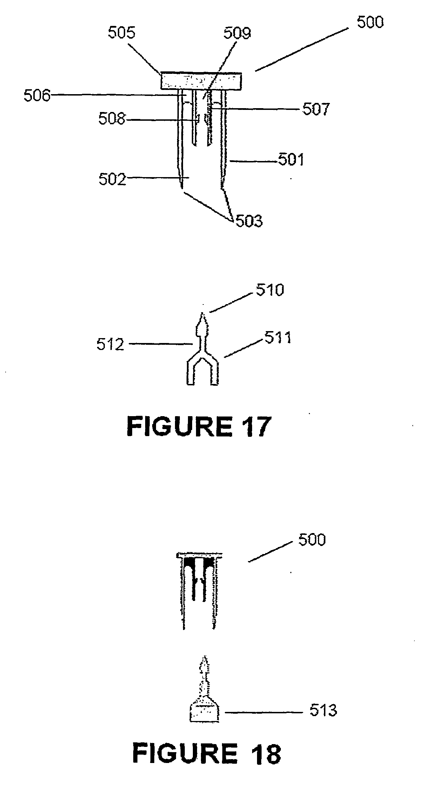

Manufacturing: a) Big fish: once eviscerated and conditioned, before packaging will be identified with a locket sampler sealed strip (30) that will have a pre-printed EAM barcode (a numbered temperature sensor could be alternatively attached) and related to a barcode reader to the barcode of the temporary marker (70), will later be packaged and then frozen or placed in cold storage so that it can later be commercialised.
b) Medium fish: upon reading its temporary marker (70) and related in the data base to its encoded box (already computerised and related in the *data centre*)*,* the temporary marker (70) will be removed and will then be manufactured.
Inter-foiling fillets: Once moulded, a locket sampler sealed strip (30) encrypting a sample of the block, the fixing sealed strip (41) of the locket sample (30) will not yet be closed, simultaneously an encrypted biochemical sample will be extracted (Figures 17-18) from each block, which will also be related to the barcode of the locket sampler sealed strip (30). When the block is frozen it will be unmoulded, next the sealed strip will be closed and adjusted. The box will have a pre-printed code relating the barcode reader with the codes of the locket sealed strips (30) placed on each block.
c) Small fish: at the beginning of their processing, the boxes codes will be read (already computerised in the *data centre*) with a barcode reader connected on line with the official database. If not an alarm with be set off in the *Data Centre* and will immediately notify the respective official controls for their intervention. Alternatively, a locket sampler with a sealed strip (30) can be applied and then extract an encrypted sample related to the locket code.

Official biochemical bank for traceability and bio-security: this second alternative embodiment applied to fishing provides an adequate solution for bio-security and the need required to trace products so as to later obtain proof to demonstrate efficacy of the proposed process. Therefore, it is indispensable to keep a biochemical sample of each unit produced and packaged under official sanitary control.

This sample will allow when in doubt, to verify the biochemical quality of said product, as well as determine the corresponding species (so a genetic mapping of our waters, which would allow us to precisely indicate the extraction area of the aquatic animal).

Extraction of biochemical material will be supervised by the control official entity to certify the act. In this way proof due to any controversy will be in the hands of the official entity during a determined period. The biochemical counterproof will be encrypted and sealed stripped on the product so that once it has been purchased (or exported) the purchaser can continue traceability (importing country). This sample, once removed from the product of origin, should be kept frozen during the period in which the food is not eaten.

Obviously, as a principle, there will be three pieces preserved:
1) the commercialised product,
2) biochemical sampler (500) deposited in the official biochemical bank, and
3) encryption on the locket sampler sealed strip (30), which the purchaser has.

This will allow to precisely indicating at which stage the problem arose, who was responsible at the time and make the irrefutable proof easier.

The samples extracted are smaller than a gram per product.

The preferred embodiment of the biochemical sampler (500) is shown in Figures 17 and 18. Comprising a hollow cylindrical body (501) defining an encrypting capsule (502) and having sharp edges (503) in its open perimeter. This cylindrical body ends in a flat lid (505).

Within the capsule (502) of the cylindrical body, a reinforcement base (506) supports a second cylindrical body with walls (507) and sharp edges. This second body within the main body having locking means (508) defining an internal chamber (509), wherein the end (510) of the pin (511) will be lodged. Once the pin (511) is lodged in the chamber (509), the locking means (508) will exert the necessary force on the grooves (512) of the pin to prevent it from being removed. The pin's design comprises a base (513) from which pressure is exerted to insert said pin (511).

As to the samples obtained, these are extracted using an encrypting machine of biochemical samples, placing two punchers at the same time: on the one hand, the locket sampler sealed strip (30) that is included in the product (with 1 gram thereof encrypted inside) and sealed stripped thereof; and on the other hand, the biochemical sampler (500) that no sooner is the sample encrypted, is removed and placed in a dispenser with barcodes which is read by the same machine and then sends the information to the data centre. Once slaughtering has finished, the dispenser are stored under the orders of the establishment's veterinary inspection (traceability and bio-security biochemical bank) in the cold storage chamber. Once the fixed term (two years) to be kept in said bank is over, the sanitary inspection service can destroy them, inscribing the date it happen in the official computerised system. From that moment on, any claim is forfeit.

Transport of manufactured product (from manufacturing plant to other destinations):
The manufacturing plant will prepare a commercial receipt where the destination of the merchandise, if there is a change of ownership and the new owner, truck and mover are detailed. The firm will collaborate with the official inspection in computerising the loading in the *data centre.* The inspector will certify with his signature and security sanitary seal, indicating the commercial destination, temperature of the merchandise, the number(s) of the sealed strip(s) of the truck or container. He will verify mover and transport documents, working of the cooling equipment in the transport, authorisation and hygienic-sanitary state. The receipt or sanitary certificate will be signed and sealed with security seals, by the authorised responsible person at the firm and the mover respectively.

Definite certification for exporting:
The merchandise protected by an exporting certificate complying with all the conditions demanded by the destination country, can be loaded with the control organisms final verification. These will replace said certificate by a definite exporting certificate according to forms approved by the destination country, the intervening inspector will sign and place the exclusive security sticker (11).

The signatures of all the inspectors responsible for providing these types of international documents must be registered in the *data centre's* files. Said inspectors will be responsible of computerising in the database the document provided and relate it to the exporting certificate that originated it.

Applying measures to prevent bio-terrorism:
Bio-terrorism is a current type of war that respects no borders, nor explicit declaration of war between countries. Neither country nor any person can be excluded to be used as a means to attack others and even be involved in the damage. Therefore, food industry should provide a prompt answer to this latent risk, warranting security in production and commercialisation of its products. There are countries that have already regulated to apply security norms. The US has demanded providing countries to apply measures to production and product commercialisation, contained in the bio-terrorism Law.

From the above, is that the proposed process includes at certain stages thereof, steps that aim to comply with current and future demands of the purchasing countries as regards Bio-terrorism, such as auditing and allowing the purchasing country to do it in the same way, applying HACCP (analysis of danger and critical points), establish security mechanisms that prevent access of non-authorised personnel to production establishments, provide raw matter, products and all production aspects, etc. quality control norms.

A third alternative embodiment of the proposed traceability process of the present invention is that applied to canned products, that has some differences with the embodiment addressed to fishing.

In this case, once the fish for manufacturing canned products has been input, following the traceability mechanism already described, the barcode of the temporary markers or boxes are being read accordingly. The merchandise so traced initiates it processing stages approved by the sate control organism.

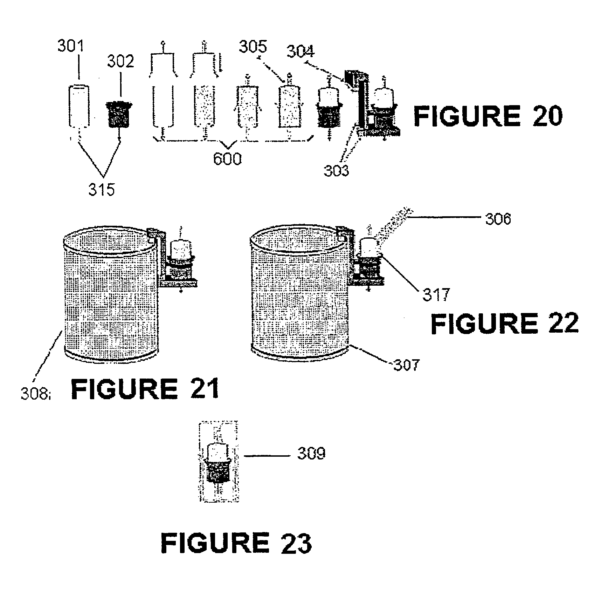

When the filling of the tins is initiated and before finishing each group going to an autoclave, two samples are extracted (as a minimum) in each metallic material preserver samplers comprising two capsules, a male capsule (301) with a elongated cylindrical shape and a female capsule (302) of less height and broadened mouth. Both capsules end with a pin (315) emerging from the barycentre of their bases. In Figure 20 a filling sequence (600) is graphed with four cross-section cuts, wherein how the first male capsule (301) is filled and then the female capsule (302) is placed like a lid, till it meats the bottom. Next the full and assembled samplers (305) are rotated 180° and placed in the respective supports (316) with upper (304) and lower (303) magnets to be fixed to each tin (308) of the same batch that are going to be autoclaved.

Once cooking has ended and taking advantage of the high temperature achieved by the sampler (305), it is touched with a paraffin bar (306) so that the drops move till they deposits on the broadened mouth (317) of the female capsule (302) of the sampler (305) so that it is sealed (Figures 21-22). Next both samplers are still in the tins (307) of their respective batch and placed during 10 days as a minimum in a maturing stove at 37°C (Figures 21-22).

Something very important to take into account in this embodiment is that the tins must each have a barcode and computerised and related to the barcodes opportunely mentioned.

Having finished the maturation stage without undergoing any inconvenience, the tins are labelled and packed in boxes. The samplers (305) are removed from the supports (316) by official personnel and a sealed strip in a sample encryptor (309) is added to each one (Figures 23-26).

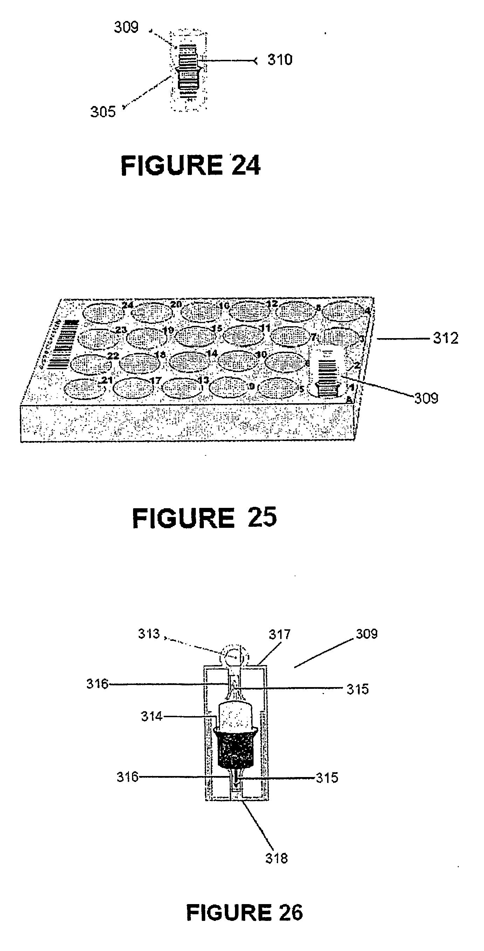

The encryptor (309) consists of a cylindrical container, preferably of transparent plastic material, comprising two cooperating parts: a base capsule (318) and a lid capsule (317). Both capsules are provided with locking means (316), where the respective pins (315) of the assembled sampler (305) are inserted such that they remain fixed and immobilized in the encryptor (309), as shown in Figure 26.

An encryptor (309) is kept in the biochemical bank of the corresponding control entity (Figure 25) in a dispenser (312) so designed and it and the others accompany the group of tins that fit each other (if the total batch does not fit into one box, the remaining boxes of the same batch that are autoclaved at a time will have as many samplers as boxes anticipated). To summarize, each box should have a sampler (305) within its respective encryptor, its chemical composition being identical in each batch.

The encryptors (309) have a pre-printed barcode (310) that must be read before being filled so as to relate it to the system with the identification barcode with which the aquatic animals arrived at the manufacturing plant and were processed to fill respective tins.

The encrypted product sample will arrive at the commercial destination in each box. The purchaser must keep the encryptor (309) intact during the sanitary time in force of the product. So, this sample is available for any future eventuality in which doubts arise on the tinned products quality, which is represented by this proof sample. This is identical to that in the biochemical sample bank under official control in the manufacturing plant. When both samples come together (previously covering the legal steps that warrant equanimity of procedure, the opening of the sealed strip sample in absence of the other conflicting side, would annul the proof and therefore the right to claims) the necessary tests could be done to determine where the problem originated. Each encryptor packaged has a sealed strip in an eyelet (313) a descriptive label of its use and the responsibility transferred to each purchaser and the main identification data. As well as obtain all the data and information of interest of the consumer as regards the purchased product. Will have in real time the complete information of nearly everything described herein as well as the monograph of the product with all its components and industrial operations.

Upon putting the traceability process into practice, authorisation should be provided to effect a biological test of all the food products possibly altered by bio-terrorism or accidentally. To do this it will be necessary to take a sample of each batch, send it to an official entity or privately to prove harmlessness, feeding it to laboratory animals. For example, if a toxin such as botulism (not chlostridium botulinum that produces it) directly in some of the ingredients of the preparation formula of a product, it could not be detected in spite of more autoclave or maturation stove or microbiological culture of the product. The same would occur with highly toxic metals and chemical substances that resist high temperatures (e.g., strychnine). Therefore, to close the security ring this final test would be indicated.

This traceability process allows to undoubtedly prove who was responsible of an alteration in the case of bio-terrorism.

We believe that with this process is a response on the demands of a non declared war, but undergoing. Up to now we have described the most evolutional tool to achieve security levels uncommon nowadays.

This traceability process addressed to canned food is applicable to all the different canned animal and plant species (including their combination and sub-products), as long as they can be sampled by particle size in a sampler as that described herein, if not, the same sampler and encryptor should be designed in a larger (sufficient) size.

Evidently many operative modifications could be introduced in the traceability process described, as well as in the design and configuration of the elements used thereof, without falling outside the sphere of the present patent invention which is clearly determined by the scope of the claims that follow.

## Claims

1. Traceability process comprising a first stage of document traceability and sanitary certification chain comprising the stages of:
a) identifying animals by birth certificates and animal identification attached to the animal's ear,
b) inscription in animal identification register and registration in the data centre; a second stage of document traceability and sanitary certification chain for transport of animals to another establishment comprising the stages of:
c) extraction of hairs with bulbs from offspring not yet weaned and filed in the animal identification register or offspring register book,
d) providing official documents for transport and registration in the Data Centre,
e) animal reception by registration in the Data Centre and inscribing them in the animal identification book,
a third stage of document traceability and sanitary certification chain for slaughtered animals comprising the stages of:
f) cutting the slaughtered animals ear where the animal identification is attached and reading of identification on line, which is later authorised or rejected by the Data Centre,
g) sealed strips are attached to the half carcases,
h) extracting DNA samples from the animal, relate them to the disabled animal identification and deposit them in the official genetic bank,
i) quartering half carcases temporarily identifying the cuts,
j) placing a locket sampler (30) on each cut, said locket sampler comprising a hollow cylindrical body defining a capsule with a sealed strip (33) with sharp edges in its open perimeter, finishing with a circular lid (31), said lid (31) comprising a hole (35) and locking means (36) to insert a security strip (41); within the cylindrical body capsule (33) a reinforced based (39) supports a second cylindrical body with walls (37) and sharp edges comprising locking means (38) defining an inner chamber (40), wherein the end (43) of the pin, will be lodged; which then continues with the sealed strip (41) itself, which has a point (42) at the end, then encrypting a genetic and biochemical sample and registrating at the Data Centre,
a forth stage of document traceability and sanitary certification chain for transport or exporting cuts comprising the stages of:
k) informing the destination data centre and providing the sanitary document for export or consumption,
l) if the importer is going to slice or mince the cuts to commercialise them he must:
l.1) identify the code of the cut that originated it, on each portion into which each cut or piece is divided,
l.2) remove the locket sampler (30) of each sliced or minced cut and deposit it in a cold storage chamber,
a fifth stage of auditory traceability comprising the stages of:
m) taking three samples of an identified portion of a cut to be audited, keep the frozen samples and seal strip them,
n) send a sample to the firm that commercialises the cut, send another sample to the official entity of the producing or exporting country and keep the remaining sample as an evidence sample,
o) determine adulteration to the cut or not by comparing the genetic sample taken in step m) with the encrypted genetic sample in the locket sampler that contained the original cut removed in step l.2),
p) if the importing firm had not kept the locket sampler, compare the genetic sample of the audited cut taken in step m) with the genetic sample in the genetic bank of the producing or exporting country.

2. Traceability process according to claim 1, wherein further to step a) a second secondary animal identification is attached to the animal's other ear and a security sticker is adhered to each animal identification containing the animal's relevant data.

3. Traceability process according to claim 1, wherein further to step g) the numbers and codes of each sealed strip are related to the database.

4. Traceability process according to claim 1, wherein step h) comprises sub-stages of introducing the slaughtered animal's ear with the animal identification attached in an extraction machine of biochemical and genetic samples, using a provided bracelet plate-sealed strip set (80) comprising a blister type central plate (81) with two depressions or cavities (82) and (83) and a series of sealed strip-bracelet (50) stamped with weakened lines (84) prepared for separating said sealed strip-bracelet (50) from the main body (81) of the blister; the upper face thereof, between the two depressions, comprises a flat surface (85) wherein a barcode (86) has been pre-printed, continuing said step h) by extracting a cylindrical wedge (87) from the ear, deposit it in said depression (82) of said blister (81) prepared for this with a pre-printed barcode, depositing the read and disabled animal identification in the other depression (83), sealing the blister and producing the series of bracelet sealed strips (50) with an identical barcode to that of the pre-printed blister (81).

5. Traceability process according to claim 1, wherein further to step i) the numbers and codes that each sealed strip has are read with a laser reader or equivalent means, as many self-adhesive labels containing this information are printed for each of the cuts to be extracted and said labels are stuck on the temporary identification markers (70).

## Patentansprüche

1. Verfahren zwecks Zurückverfolgbarkeit umfassend:
- eine erste Stufe zwecks Zurückverfolgbarkeit von Unterlagen und der Kette von Gesundheitsbescheinigungen umfassend die Stufen :
a) Identifizierung der Tiere durch Geburtsscheine und ein an das Ohr des Tieres angebrachtes Identifizierungszeichen;
b) Eintragung im Tieridentifizierungsregister und Registrierung im Data Centre;
- eine zweite Stufe zwecks Zurückverfolgbarkeit von Unterlagen und der Kette von Gesundheitsbescheinigungen zwecks Beförderung von Tieren in einen anderen Betrieb, umfassend folgende Stufen:
c) Extraktion von Haaren mit Wurzel vom noch nicht entwöhnten und im Tieridentfizierungsregister oder im Jungtieregistrierbuch eingetragenen Jungtier;
d) Beschaffung amtlicher Unterlagen zur Beförderung und Eintragung im Data Centre;
e) Empfangnahme des Tieres durch Registrierung im Data Centre und Eintragung im Tieridentifizierungsbuch;
- eine dritte Stufe zwecks Zurückverfolgbarkeit von Unterlagen und der Kette von Gesundheitsbescheinigungen für geschlachtete Tiere, umfassend folgende Stufen:
f) Abschneiden vom geschlachteten Tier des Ohres, an dem das Identifizierungszeichen angebracht ist, und Lesung des Identifizierungszeichens *on line,* die später durch das Data Centre zu bestätigen oder zurückzuweisen ist;
g) Anbringung von Kontrollbändern an die Halbrümpfe;
h) Entnahme von DNA-Proben aus dem Tier, Verknüpfung dieser Proben mit dem entwerteten Identifizierungszeichen und Hinterlegung derselben bei der amtlichen Genetikbank;
i) Vierteilung der Halbrümpfe und zeitweilige Identifizierung der abgeschnittenen Stücke;
j) Anlegung eines Probenkästchens (30) an jedes abgeschnittene Stück, wobei dieses Probenkästchen einen hohlen zylinderförmigen Körper umfasst, der eine Kapsel mit einem Kontrollband (33) mit scharfen Kanten in seinem offenen Umkreis definiert, endend in einem kreisförmigen Deckel (31), wobei dieser Deckel (31) eine Aushöhlung (35) und Abschlussvorrichtung (36) zum Einsatz eines Kontrollbandes (41) aufweist;
- eine vierte Stufe zwecks Zurückverfolgbarkeit von Unterlagen und der Kette von Gesundheitsbescheinigungen zur Beförderung oder Ausfuhr abgeschnittener Stücke umfassend folgende Stufen:
k) Informationserstattung an das Bestimmungs-Data-Centre und Beschaffung der Sanitätsurkunde für Ausfuhr und Konsum,
i) sollte der Importeur die abgeschnittenen Stücke in Scheiben zerschneiden oder zerhacken wollen, so hat er, um sie kaufmännisch zu verwerten:
i.1) den Kode des ursprünglich abgeschnittenen Stückes auf jeder Portion zu identifizieren, in die das abgeschnittene Stück oder Teil zerteilt worden ist;
i.2) das Probenkästchen (30) von jedem in Scheiben geschnittenem oder zerhacktem abgeschnittenen Stück zu entfernen und in eine Kühlkammer unterzubringen;
- eine fünfte Stufe zwecks Zurückverfolgbarkeit für Prüfungszwecke, umfassend folgende Stufen:
m) Entnahme dreier Proben aus einer identifizierten Portion eines zu prüfenden abgeschnittenen Stückes, Aufbewahrung der gefrorenen Proben und Versehung derselben mit Kontrollbändern;
n) Sendung einer Probe an die Firma, die das abgeschnittene Stück kaufmännisch verwertet, Sendung einer anderen Probe an die Behörde des Hersteller- oder Ausfuhrlandes und Zurückhaltung der übriggebliebenen Probe für Nachweiszwecke;
o) Feststellung, ob das abgeschnittene Stück verfälscht ist oder nicht, durch Vergleichung der in Schritt m) entnommenen genetischen Probe mit der eingekapselten genetischen Probe im Probenkästchen, welches das ursprüngliche, in Schritt 1.2) entfernte abgeschnittene Stück enthielt;
p) hat die Einfuhrfirma das Probenkästchen nicht aufbewahrt, so ist das genetische in Schritt m) entnommene geprüfte abgeschnittene Stück mit der genetischen in der Genetikbank des Hersteller- oder Ausfuhrlandes abgelegten Probe zu vergleichen.

2. Verfahren zwecks Zurückverfolgbarkeit nach Anspruch 1, wobei im Anschluss an Schritt a) ein zweites zweitrangiges Tieridentifizierungszeichen an das andere Ohr des Tieres angebracht und an das Identifizierungszeichen eines jeden Tieres ein Sicherheitsaufkleber enthaltend die sachdienlichen Daten des Tieres befestigt wird.

3. Verfahren zwecks Zurückverfolgbarkeit nach Anspruch 1, wobei im Anschluss an Schritt g) die Zahlen und Kodes eines jeden Kontrollbandes mit der Datenbasis verknüpft werden.

4. Verfahren zwecks Zurückverfolgbarkeit nach Anspruch 1, wobei Schritt h) Unterstufen umfasst, und zwar das Einlegen des Ohres des geschlachteten Tieres mit dessem angebrachten Identifizierungszeichen in eine Maschine zur Extraktion biochemischer und genetischer Proben, unter Benutzung eines beschaffenen Armband-Kontrollband-Satzes (80) umfassend eine blisterartige Mittelplatte (81) mit zwei Vertiefungen oder Aushöhlungen (82) und (83) und eine Reihe von armbandartigen Kontrollbändern (50) gestanzt mit abgeschwächten Linien (84) hergestellt zwecks Abtrennung besagten armbandartigen Kontrollbandes (50) vom Hauptkörper (81) des Blisters; die Oberseite davon, zwischen den beiden Vertiefungen, umfasst eine flache Oberfläche (85) worauf ein Strichkode (86) vorgedruckt ist, wobei besagter Schritt h) weitergeführt wird durch Herausnahme aus dem Ohr eines zylinderförmigen Keils (87), Lagerung desselben in besagte Vertiefung (82) des besagten Blisters (81), der hierfür hergestellt wurde mit einem vorgedruckten Strichkode, und Lagerung des gelesenen und entwerteten Tieridentifizierungszeichens in die andere Vertiefung (83), Siegelung des Blisters und Herstellung der Reihe armbandartiger Kontrollbänder (50) mit einem dem des vorgedruckten Blisters (81) gleichen Strichkode.

5. Verfahren zwecks Zurückverfolgbarkeit nach Anspruch 1, wobei im Anschluss an Schritt a), die Zahlen und Kodes, die jedes Kontrollband aufweist, mit einem Laserleser oder gleichwertigem Gerät gelesen werden und selbstanhaftende, diese Information enthaltende Etiketts, gleich in Anzahl den zu extrahierenden abgeschnittenen Stücken, gedruckt und an die zeitweiligen Identifizierungszeichen angeklebt werden.

## Revendications

1. Procédé de traçabilité comprenant une première étape de traçabilité documentaire et chaîne de certification sanitaire, **caractérisé en ce qu'**il comprend les étapes de:
a) Identifier les animaux moyennant les actes de naissance et les numéros d'identification scellés sur l'oreille de l'animal,
b) Les inscrire sur le Registre d'identification et les inscrire sur le Centre de Données;
Une deuxième étape de traçabilité documentaire et chaîne de certification sanitaire pour le mouvement des animaux à un autre bâtiment, comprenant les étapes de:
c) Extraire des poils avec le bulbe du petit animal au pied de sa mère et les classer dans le livre du Registre d'Identification ou Registre d'élevage,
d) Délivrer la documentation officielle de mouvement et l'inscrire dans le Centre de Données,
e) Recevoir les animaux en les inscrivant dans le Centre de Données et sur le livre d'identifications,
Une troisième étape de traçabilité documentaire et chaîne de certification sanitaire pour l'abattage des animaux, comprenant les étapes de:
f) Couper l'oreille de l'animal abattu ayant le numéro d'identification et le lire en ligne, avec l'autorisation ou la dénégation ultérieure du Centre de Données,
g) Sceller les demi-carcasses,
h) Enlever des échantillons de l'ADN de l'animal, les lier à l'identification utilisée et les déposer auprès la Banque génétique officielle,
i) dépecer les demi-carcasses en identifiant temporairement les coupes,
j) Placer dans chaque coupe un échantillonneur bouclé (30), ledit échantillonneur bouclé (30) comprenant un corps cylindrique creux définissant une capsule à dispositif à sceller (33) à bords tranchants sur son périmètre ouvert, finissant par un couvercle circulaire (31), ledit couvercle (31) comprenant un orifice (35) et des moyens de blocage (36) pour y insérer un scellé de sécurité (41); dans la capsule (33) du corps cylindrique, une base de renfort (39) support un deuxième corps cylindrique à parois (37) et bord tranchant, comprenant des moyens de blocage (38) définissant une chambre interne (40), dans laquelle il sera logé la pointe (43) d'une cheville continuant après avec le scellé (41) proprement dit, qui présente une pointe (42) à son extrémité; en cryptant donc un échantillon génétique et biochimique et l'inscrire dans le centre de données,
Une quatrième étape de traçabilité documentaire et chaîne de certification sanitaire pour le mouvement o l'exportation des coupes, comprenant les étapes de:
k) Informer au centre de données du destin et délivrer le document sanitaire d'exportation ou consommation,
l) Si l'importateur va trancher ou couper les coupes en morceaux pour les commercialiser, il faut:
l.1) identifier le code de la coupe d'origine, sur chaque portion divisée de chaque coupe ou pièce,
l.2) enlever l'échantillonneur bouclé (30) de chaque coupe tranchée ou coupée en morceaux et le déposer dans la chambre frigorifique,
Une cinquième étape d'audit de la traçabilité comprenant les étapes de:
m) Enlever trois échantillons de portion identifié d'une coupe à auditer, préserver les échantillons surgelés et les sceller,
n) Envoyer un échantillon à l'entreprise commercialisant la coupe, envoyer un autre échantillon à l'organisme officiel du pays producteur ou exportateur et conserver l'autre échantillon en tant qu'échantillon témoin,
o) Déterminer l'adultération ou non de la coupe en comparant l'échantillon génétique pris à l'étape m) avec l'échantillon génétique crypté de l'échantillonneur bouclé qui portait la coupe originelle enlevée à l'étape l.2),
p) Au cas où l'entreprise du pays importateur n'aurait pas préservé l'échantillonneur bouclé, comparer l'échantillon génétique de la coupe auditée prise à l'étape m) avec l'échantillon génétique de la banque génétique du pays producteur ou exportateur.

2. Procédé de traçabilité, selon la revendication 1 **caractérisé en ce que**, complémentairement à l'étape a), un deuxième numéro d'identification secondaire est mis sur l'autre oreille de l'animal et un autocollant de sûreté contenant les données remarquables de l'animal est plaqué sur chaque numéro d'identification.

3. Procédé de traçabilité selon la revendication 1 **caractérisé en ce que**, complémentairement à l'étape g), les numéros et codes ayant chaque scellé sont rapportés à la base de données.

4. Procédé de traçabilité selon la revendication 1, **caractérisé en ce que** l'étape h) comprend les sous-étapes d'introduire dans un dispositif de prélèvement d'échantillons biochimiques et génétiques l'oreille de l'animal abattu avec le numéro d'identification scellé, utilisant un ensemble de bracelet plaquette-scellés (80) comprenant une plaquette centrale (81) du type blister pourvue de deux dépressions ou cavités (82) et (83) et une série de scellés-bracelets (50) estampées de lignes d'affaiblissement (84) aménagés pour le détachement desdits scellés-bracelets (50) du corps central (81) du blister; la face supérieure dudit corps comprend une surface plate (85) entre les deux dépressions, dans laquelle il a été préalablement imprimé un code de barres (86); en suivant ladite étape h) avec le prélèvement d'une pointe cylindrique (87) de l'oreille, le déposer dans ladite dépression (82) dudit blister (81) disposée à tel effet ayant un code de barres imprimé préalablement, déposer le numéro d'identification déjà lu et inutilisé dans l'autre dépression (83), sceller le blister et constituer une série scellés-bracelets (50) avec un code de barres (51) identique au code imprimé préalablement sur le blister (81).

5. Procédé de traçabilité, selon la revendication 1 **caractérisé en ce que**, complémentairement à l'étape i), les numéros et les codes ayant chaque scellé sont lus moyennant un lecteur laser ou moyen équivalent, et tant de labels autocollants ayant cet information sont imprimées que des coupes veulent être extraites et lesdits labels sont collés sur les marqueurs d'identification temporaires (70).
